# EUROPÄISCHE PATENTSCHRIFT

(11) **EP 0 534 987 B1**
(45) Veröffentlichungstag und Bekanntmachung des Hinweises auf die Patenterteilung: **03.08.1994**
(21) Anmeldenummer: 91908950.8
(22) Anmeldetag: 15.05.1991
(51) Int. Cl.: F16D 65/097

(54) **BELAGHALTERUNG IN SCHEIBENBREMSEN FÜR STRASSENFAHRZEUGE, INSBESONDERE NUTZFAHRZEUGE**
PAD RETAINING SYSTEM IN DISC BRAKES FOR ROAD VEHICLES, ESPECIALLY UTILITY VEHICLES
FIXATION DE GARNITURES DE FREINS A DISQUE POUR VEHICULES ROUTIERS, EN PARTICULIER DES VEHICULES UTILITAIRES

(30) Priorität: 26.06.1990 DE 4020287
(43) Veröffentlichungstag der Anmeldung: 07.04.1993
(73) Patentinhaber: KNORR-BREMSE Systeme für Nutzfahrzeuge GmbH, 80809 München (DE)
(72) Erfinder: FISCHER, Rudolf, D-8058 Erding (DE); SCHULLERUS, Otto, D-8000 München 90 (DE); TRIMPE, Robert, D-8000 München 50 (DE)
(74) Vertreter: KUHNEN, WACKER & PARTNER
(86) Internationale Anmeldenummer: DE9100400
(87) Internationale Veröffentlichungsnummer: WO9200465

(56) Entgegenhaltungen:
- EP-A- 032 462
- EP-A- 0 248 385

## Beschreibung

Die Erfindung betrifft eine Belaghalterung nach dem Gattungsbegriff des Patentanspruchs 1.

Bei Scheibenbremsen, insbesondere Teilbelagscheibenbremsen bekannter Konstruktion, welche sowohl in Personenkraftwagen als auch in Nutzfahrzeugen verwendbar sind, werden in Belagschächten einführbare, Reibbeläge tragende Belagträger bzw. Tragplatten verwendet, welche zum Zwecke der Abbremsung einer Bremsscheibe durch Zuspannmittel an diese angepreßt werden. Beim Befahren von Bodenunebenheiten treten an Rad -und Fahrzeugachse und damit an der mit der Fahrzeugachse starr verbundenen Bremse sehr hohe Beschleunigungen auf, deren Größenordnung mit ca 20 g angesetzt wird. Die Belagträger sind derartigen Beschleunigungen ausgesetzt und besitzen die Neigung, innerhalb der Belagschächte und ihrer Führungen mit hoher Wucht aufzuschlagen, vorzugsweise senkrecht zur Bodenebene, so daß diese Kräfte in vollem Unfang auf die Bauteile der Scheibenbremse einwirken können.

Zur Vermeidung der Klapperns der Beläge bzw. des Ausschlagens der Führungsflächen in den Belagschächten ist es bekannt, an der Außenkante der Belagträger Blattfedern zur Wirkung kommen zu lassen, welche den Bremsbelag in seiner Gesamtheit federnd verspannen. Um einen schnellen Belagwechsel mit geringstmöglichem Aufwand durchführen zu können, ist ein vom Bremssattelgehäuse getragener, z.B. an diesem verschraubbarer Haltebügel vorgesehen, welcher auf die Blattfedern einwirkt und diese unter Vorspannung an die Außenkante des Belagträgers anpreßt. Haltebügel dieser Art werden unter anderem mit Schraubverbindungen oder mit einfachen Stiftverbindungen am Bremssattelgehäuse fixiert. Stiftverbindungen haben dabei den Nachteil, daß es beim Austreiben des Stiftes zu einer explosionsartigen Entspannung der stark vorgespannten Belaghaltefeder kommen kann, was schlimmstenfalls Personenschaden zur Folge hat. Bei Schraubverbindungen kann dieses Problem durch geeignete Wahl der Einschraublänge, die einen Eingriff der Schraube im Muttergewinde bis hin zum entspannten Zustand der Feder vorsieht, zwar prinzipiell vermieden werden, jedoch ist auf Grund der Betriebsbedingungen der Scheibenbremse (Hitze, Kälte, Schmutz, Feuchtigkeit) ein Festkorrodieren der Schraube nicht vollständig auszuschließen. Dies kann dazu führen, daß der Schraubenkopf beim Löseversuch abgeschert wird und damit das gleiche Problem der explosionsartigen Entspannung auftritt, wie es bei Stiftverbindungen in vorgenannter Weise existiert.

Scheibenbremsen für Nutzfahrzeuge mit großflächig dimensionierten Bremsbelägen weisen zur Verteilung der Zuspannkräfte dienende Druckverteilerplatten auf, welche in einer den Belagträgerplatten vergleichbaren Weise in Schächte des Bremssattels einführbar sind und in gleicher Weise mittels Haltefedern gegenüber Klappern und Ausschlagen der Führungwände abgesichert sind. Auch bei derartigen Druckverteilerplatten, welche im allgemeinen zwischen dem mechanischen Zuspannelement und der Belagträgerplatte angeordnet sind, können Probleme der vorstehend genannten Art auftreten, wenn der sowohl auf den Belagträger als auch auf die Druckverteilerplatte einwirkende Haltebügel demontiert wird.

Eine Belaghalterung gemäß dem Oberbegriff des Anspruchs 1 ist aus der EP-A-0 248 385 bekannt. Diese bekannte Belaghalterung weist mindestens einen an einem Bremssattel bzw. einem Bremsgehäuse vorgesehenen Belagschacht auf, in den ein einen Reibbelag tragender Belagträger und ggf. eine Druckverteilerplatte einführbar ist, wobei auf die Außenkanten des Belagträgers und ggf. der Druckverteilerplatte eine Blattfeder einwirkt, die sich sattel- bzw. gehäuseseitig an einem lösbaren Niederhalteelement abstützt. Auf beiden Seiten des Belagträgers bzw. der Druckverteilerplatte ist ferner jeweils eine Haltelasche ausgebildet, die eine halbrunde Ausnehmung aufweist, in die ein entsprechend komplementär bzw. als Halbbogen ausgebildetes Ende der Blattfeder eingreift. Hierdurch wird einerseits ein leichtes Einführen der Blattfeder erreicht und andererseits sichergestellt, daß sich die Blattfeder bei der Demontage nicht ohne weiteres löst.

Die genannte Ausbildung der Haltelasche hat jedoch den Nachteil, daß das eingangs genannte explosionsartige Entspannen insofern nicht unter allen Umständen verhindert werden kann, als bereits ein geringfügiges Manipulieren an der Blattfeder dazu führt, daß diese ihren Sitz vorzeitig verläßt; Verletzungen können daher gleichfalls nicht sicher verhindert werden. Ein weiterer Nachteil der bekannten Belaghalterung ist darin zu sehen, daß die Ausbildung von halbrunden Enden an der Blattfeder relativ kostspielig ist.

Der Erfindung liegt daher die Aufgabe zugrunde, eine Belaghalterung gemäß dem Oberbegriff des Anspruchs 1 derart weiterzubilden, daß trotz kostengünstiger Herstellung eine plötzliche Ausdehung der Blattfeder bei der Demontage sicher verhindert werden kann.

Zur Lösung dieser Aufgabe dienen die Merkmale nach dem Kennzeichnungsteil des Anspruches 1.

Der Aufbau sowohl des Belagträgers als auch der Blattfeder ist dem zu Folge sehr einfach und dennoch von absolut sicherer Wirkungweise wobei die Blattfeder im gespannten Zustand mit ihren Ausnehmungen derart über die Haltelaschen führbar ist, daß die Haltelaschen bei nachfolgender vollkommener oder teilweiser Entspannung der Blattfeder deren Ausnehmungen durchsetzen und die Blattfeder unverlierbar gehaltert ist. Bei Demontage des Bremsbelages bzw. der Druckverteilerplatte kann es selbst bei einem Abscheren der zum Befestigen des Haltebügels dienenen Schraubverbindung nicht vorkommen, daß ein explosionsartiges Ausdehnen und Abspringen der Blattfeder in Kauf zu nehmen ist, da die Blattfeder nach teilweiser Entspannung an den Haltelaschen, diese hintergreifend, festhakt und gehaltert bleibt.

Ein Vorteil der unverlierbaren Halterung der Blattfeder am Belagträger bzw. an der Druckverteilerplatte besteht auch darin, daß eine Vormontage der Blattfeder z.B. in der Werkstatt vorgenommen werden kann, d.h. ein Einlegen der Blattfeder innerhalb beengter Einbauverhältnisse ist nicht mehr erforderlich.

Vorteilhafte Ausgestaltungen und Weiterbildungen sind in weiteren Ansprüchen aufgeführt:

Die Erfindung ist nachfolgend anhand eines Ausführungsbeispiels unter Bezugnahme auf die beigefügte Zeichnung erläutert.
- Fig.1: ist eine Teilseitenansicht einer Belagträgerplatte mit an dieser ausgebildeten Haltelaschen, in welchen (mit ausgezogenen Linien dargestellt) die Blattfeder in eingehängter Position befindlich dargestellt ist, während strichliniert die Form der Blattfeder im gelösten, entspannten Zustand wiedergegeben ist;
- Fig.2: ist eine Draufsicht auf die Blattfeder in ihrem Einbauzustand am Belagträger;
- Fig.3: ist eine Draufsicht der in Fig.1 strichliniert wiedergegebenen Blattfeder in ihrem entspannten Zustand;
- Fig.4: ist eine vergrößerte Teilansicht einer der Haltelaschen unter Darstellung der an ihr ausgebildeten Hinterschneidung.

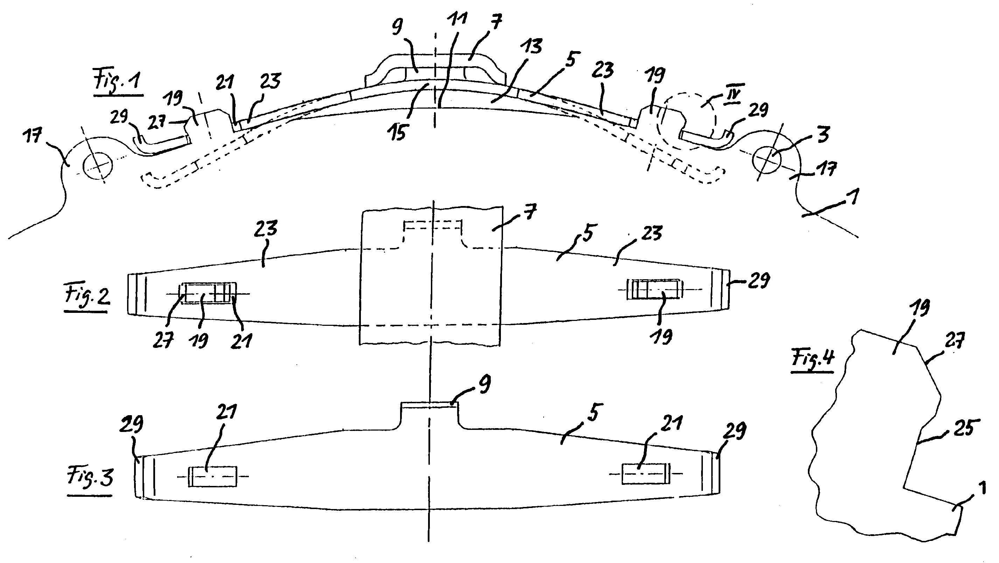

In Fig. 1 der Zeichnung ist in vereinfachter Seitenteilansicht das in Einbaulage im allgemeinen obere Ende eines Belagträgers 1 dargestellt, welcher z.B. als Trägerblech ausgebildet ist und mit dem an ihm befestigten (nicht dargestellten) Reibbelag in den Belagschacht einer Scheibenbremse einführbar ist. Am Belagträger können hierbei Augen 3 vorgesehen sein, mittels welchen der Belagträger aus dem Belagschacht herausziehbar ist. Innerhalb des Belagschachtes liegt der (nicht dargestellte) Reibbelag in an sich bekannter Weise einer (nicht dargestellten) Bremsscheibe gegenüber, wobei in gleichfalls bekannter Weise Zuspannelemente wirksam werden, um die Reibbeläge vorzugsweise an beiden Seiten der Bremsscheibe an diese anzupressen.

Die Belagträger bzw. Druckverteilerplatten werden nach dem Einführen in ihren Belagschacht jeweils mit Hilfe einer Blattfeder 5 gehalten, welche ihrerseits durch einen von der Oberseite auf die Blattfeder wirkenden, in Querrrichtung zur Längsachse der Blattfeder sich erstreckenden Haltebügel gesichert ist. Der in Fig.1 in stirnseitiger Ansicht und in Fig.2 in Teildraufsicht wiedergegebene Haltebügel 7 ist mit einem Ende an einem (nicht dargestellten) Widerlager oder dgl. Halteelement des Bremssattelgehäuses einhängbar und ist am entgegengesetzten Ende vorzugsweise mit einer Schraube gegenüber dem Bremssattelgehäuse verspannbar, derart, daß mit Hilfe des Haltebügels 7 auf die Blattfeder 5 und demnach auf den Belagträger 1 eine gemäß Darstellung in Fig.1 nach unten gerichtete Kraft ausgeübt wird. Bei der in der Zeichnung wiedergegebenen Ausführungsform ist die Blattfeder 5 mit einer seitlichen Auskragung 9 versehen, gegen welche der Haltebügel zur Anlage kommt; die Blattfeder 5 kann im Zusammenwirken mit dem Haltebügel, d.h. im Mittelbereich, auch in anderer Weise ausgebildet sein, um die Spannkräfte des Haltebügels aufzunehmen.

Die Blattfeder 5 wird zum Zwecke der federnden Verspannung des Belagträgers 1 ihrerseits durch den Haltebügel 7 gegen Federkraft verspannt, weshalb die Blattfeder 5 im Einbauzustand eine gegenüber dem entspannten Zustand stärker abgeflachte Konfiguration besitzt, wie aus Fig.1 zu ersehen ist. In Fig.1 ist strichliniert der entspannte Zustand der Blattfeder d.h. der Zustand vor der Montage der Blattfeder am Belagträger, wiedergegeben, während mit ausgezogenen Linien der Einbauzustand der Blattfeder 5 an der Oberseite des Belagträgers 1 bei Verspannung durch den Haltebügel 7 dargestellt ist. Im Einbauzustand besteht zwischen der Unterseite der Blattfeder 5 und der Außenkante 11 des Belagträgers 1 ein Freiraum 13, welcher die Federbewegungen des Belagträges relativ zur Blattfeder zuläßt.

Zwischen den die Augen 3 enthaltenden Laschen 17 des Belagträgers 1 und seiner Mittelachse erstrecken sich von der Außenkante 11 des Belagträgers Haltelaschen 19, in welche die beiden Enden der Blattfeder einhängbar sind. Die Blattfeder besitzt hierfür Ausnehmungen 21, durch welche die Haltelaschen 19 im gespannten Zustand der Blattfeder hindurchführbar sind. Der Abstand der Haltelaschen 19 zu beiden Seiten der Mittelachse als auch der Abstand der Ausnehmungen 21 zu beiden Seiten des Mittelteils 15 der Blattfeder ist so gewählt, daß die seitlichen Schenkel 23 der Blattfeder 5 nur in ihrem gespannten Zustand über die Haltelaschen 19 geführt und hinterhakt werden können. Die Befestigung der Blattfeder an der Außenkante 11 des Belagträgers kann bei vom Bremssattel gelöstem Belagträger geschehen oder sie wird direkt nach dem Einlegen des Belagträgers in den Belagschacht vorgenommen, in jedem Fall erfolgt die Befestigung vor dem nachfolgenden Positionieren und Festschrauben des Haltebügels 7, welcher nach seiner Befestigung eine nach unten gerichtete Kraft auf die am Belagträger positionierte Blattfeder 5 ausübt. Wird die Scheibenbremse bei in Bewegung befindlichem Fahrzeug starken Stößen d.h. sehr hohen Beschleunigungen ausgesetzt, dann wird mit Hilfe der Blattfeder 5 nach außen gerichteten Bewegungen des Belagträgers entgegengewirkt; ein Klappern der Beläge bzw. ein Ausschlagen der Führungsflächen im Belagschacht wird hierdurch verhindert.

Aus Fig.4 der Zeichnung ist zu ersehen, daß die Haltelaschen 19 außenseitig d.h. in einer den Augen 3 zugewandten Position Hinterschneidungen 25 aufweisen. Im montierten Zustand der Blattfeder 5, in welchem sie durch den Haltebügel 7 bereits etwas vorgespannt ist, durchgreifen die beiden Haltelaschen 19 die Fenster bzw. Ausnehmungen 21 in den beiden Schenkeln 23 in der in Fig.1 wiedergegebenen Weise d.h. die Blattfeder 5 ist unverlierbar an den Haltelaschen 19 gehaltert, wobei die beiden Außenkanten der Ausnehmungen 21 ohne Berührung mit den Haltelaschen sind. Bei einem Belagträgerwechsel kann die Blattfeder 5 von den Haltelaschen 19 abgenommen werden, wenn zuvor der Haltebügel 7 durch Lösen seiner (nicht dargestellten) Schraubverbindung am Bremssattel aus seiner Halteposition gelöst wird. Bei diesem Lösen d.h. Abschwenken des Haltebügels 7 oder bei einem ungewollten Abscheren der Schraubverbindung kann es infolge der vorgeschriebenen Halterung der Blattfeder 5 am Belagträger 1 nicht zu einer explosionsartigen Trennung der Blattfeder vom Belagträger kommen, da die Blattfeder, wie erläutert, am Belagträger gefesselt ist und ein Lösen nur dann ermöglicht ist, wenn mittels geeigneter Werkzeuge oder in sonstiger Weise auf die Blattfeder 5 derart nach unten gerichtet gedrückt wird, daß die Ausnehmungen 21 tragenden Schenkel 23 infolge der sich ergebenden Streckung der Blattfeder von den Haltelaschen abgehoben werden können.

Die Ansichten nach Fig.4 als auch nach Fig.l lassen erkennen, daß die Haltelaschen vorzugweise Anschrägungen 27 im Bereich der Außenkante aufweisen; diese Anschrägungen erleichtern das Montieren der Blattfeder, da diese federnd über die Anschrägungen gedrückt werden kann, um die in Fig.1 mit ausgezogenen Linien wiedergegebene Position am Belagträger einzunehmen.

Gemäß Figuren 1-3 kann die Blattfeder 5 an ihren beiden Enden 29 nach oben gerichtet abgerundet sein, derart, daß die Enden am Ubergang zu den Laschen 17 anliegen, wie dies in Fig.1 veranschaulicht. Die Erfindung ist jedoch nicht auf eine derartige Ausführungsform der Blattfeder beschränkt, d.h., das der Erfindung zugrunde liegende Prinzip der Halterung der Blattfeder am Belagträger ist auch bei anders gearteter Ausgestaltung der Blattfederenden als auch bei anderer Formgebung von am Belagträger vorgesehenen, zum Herausziehen aus dem Belagschacht dienenden Ösen verwirklicht.

Blattfedern der beschriebenen Art bestehen vorzugweise aus Federstahl von bekannter Zusammensetzung. Die Fertigung derartiger Blattfedern ist in sehr einfacher Weise zu verwirklichen d.h. sie können mit einfachsten Werkzeugen gefertigt werden. In gleicher Weise ist es in fertigungstechnischer Hinsicht sehr einfach, am Belagträger 1 Haltelaschen 19 der vorgeschriebenen Konstruktion und Wirkungsweise vorzusehen.

### Bezugszeichenliste

- 1: Belagträger
- 3: Auge
- 5: Blattfeder
- 7: Haltebügel
- 9: Auskragung
- 11: Außenkante
- 13: Freiraum
- 15: Mittelteil
- 17: Lasche
- 19: Haltelasche
- 21: Ausnehmung
- 23: Schenkel
- 25: Hinterschneidung
- 27: Anschrägung
- 29: Ende

## Patentansprüche

1. Belaghalterung für eine Scheibenbremse für Straßenfahrzeuge, mit an einem Bremssattel bzw. einem Bremsgehäuse vorgesehenen Belagschächten, in die jeweils ein einen Reibbelag tragender Belagträger und ggf. eine Druckverteilerplatte einführbar ist, wobei auf die Außenkanten des Belagträgers und ggf. der Druckverteilerplatte eine Blattfeder einwirkt, die sich sattel- bzw. gehäuseseitig an einem lösbaren Niederhalteelement abstützt und im montierten Zustand mittels zweier Haltelaschen, die auf beiden Seiten des Belagträgers bzw. der Druckverteilerplatte auskragen, an einem selbsttätigen Lösen gehindert ist,
***dadurch gekennzeichnet,***
**[a]** daß an jedem seitlichen Schenkel der Blattfeder *(5)* eine Ausnehmung *(21)* ausgebildet ist und
**[b]** daß die Haltelaschen *(19)* als von der Außenkante des Belagträgers *(1)* bzw. der Druckverteilerplatte auskragende, an ihrer Außenkante eine Hinterschneidung aufweisende Vorsprünge *(19)* ausgebildet sind, die im montierten Zustand die jeweilige Ausnehmung *(21)* derart durchgreifen, daß die Außenkante dieser Ausnehmung *(21)* an der Hinterschneidung anliegt.

2. Belaghalterung nach Anspruch 1, ***dadurch gekennzeichnet,*** daß die Blattfeder *(5)* eine derartige Wölbung aufweist, daß die Ausnehmungen *(21)* bei der Montage der Blattfeder *(5)* infolge ihres dabei gespannten Zustandes hinderungsfrei über die Vorsprünge *(19)* führbar sind.

3. Belaghalterung nach Anspruch 1 oder 2, ***dadurch gekennzeichnet,*** daß die Blattfeder *(5)* abgerundete Enden *(29)* aufweist, die im montierten Zustand an Laschen *(17)* anliegen, die zum Herausnehmen des Belagträgers *(1)* bzw. der Druckverteilerplatte dienen.

4. Belaghalterung nach einem der Ansprüche 1 bis 3, ***dadurch gekennzeichnet****,* daß das Mittelteil *(15)* der Blattfeder *(5)* im montierten Zustand gegenüber der Außenkante *(11)* des Belagträgers *(1)* bzw. der Druckverteilerplatte einen derartigen Abstand aufweist, daß für die Federbewegung des Belagträgers *(1)* bzw. der Druckverteilerplatte relativ zum Mittelteil *(15)* der Blattfeder (*5)* ein ausreichender Freiraum vorhanden ist.

5. Belaghalterung nach einem der Ansprüche 1 bis 4, ***gekennzeichnet durch*** eine vom Mittelteil *(15)* der Blattfeder *(5)* abstehende Auskragung *(9)*, mittels der das Niederhalteelement *(7)* im montierten Zustand unter Vorspannung auf die Blattfeder *(5)* einwirkt.

6. Belaghalterung nach einem der Ansprüche 1 bis 5, ***dadurch gekennzeichnet***, daß als Niederhalteelement *(7)* ein am Bremssattel bzw. Bremsgehäuse verschraubbarer oder in sonstiger Weise befestigbarer Haltebügel *(7)* vorgesehen ist.

## Claims

1. A lining holder for a disk brake for road vehicles, with lining shafts provided on a brake caliper and/or a brake housing, into each of which a pad holder carrying a friction lining and optionally a pressure distribution plate can be inserted, wherein a leaf spring acts, on the outer edges of the pad holder and optionally of the pressure distribution plate, which leaf spring is supported on a detachable holding element on the caliper and/or housing side and in the assembled state is prevented from self-release by means of two holding clips which project out on both sides of the pad holder and/or of the pressure distribution plate, characterized (a) in that on each lateral leg of the leaf spring (5) a recess (21) is formed and (b) in that the holding clips (19) take the form of projections (19) which project out from the outer edge of the pad holder (1) and/or the pressure distribution plate and which comprise on their outer edge a rear cutout, said holding clips, in the assembled state, penetrating the corresponding recess (21) in such a way that the outer edge of this recess (21) rests against the rear cutout.

2. A lining holder according to claim 1 characterized in that the leaf spring (5) has a curvature such that the recesses (21) can be inserted without hindrance over the holding clips (19) during the mounting of the leaf springs (5) owing to its tensioned state.

3. A lining holder according to claims 1 or 2 characterized in that the leaf spring (5) comprises rounded edges (29), which rest against brackets (17) in the assembled state, which serve for removing the pad holder (1) and/or the pressure distribution plate.

4. A lining holder according to any one of claims 1 to 3 characterized in that in the assembled state the middle part (15) of the leaf spring (5) is spaced with respect to the outer edge (11) of the pad holder (1) and/or the pressure distribution plate is such a way that sufficient free room is provided for the spring movement of the pad holder (1) and/or the pressure distribution plate relative to the middle part (15) of the leaf spring (5).

5. A lining holder according to any one of claims 1 to 4 characterized in that a piece (9) projecting from the middle part (15) of the leaf spring (5) acts in the assembled state under initial tensioning on the leaf spring (5) by means of the holding element (7).

6. A lining according to any of claims 1 to 5 characterized in that a holding bracket (7) which can be screwed or otherwise secured, is provided as the holding element (7) on the brake caliper and/or brake housing.

## Revendications

1. Fixation de garniture de frein à disque pour véhicules routiers, comportant des logements de garnitures, qui sont prévus sur un étrier de frein ou un boîtier de frein et dans lesquels peuvent être insérés respectivement les porte-garnitures, qui portent chacun une garniture de friction, et éventuellement une plaque de répartition de pression, dans laquelle sur les bords extérieurs du porte-garniture et éventuellement de la plaque de répartition de pression agit un ressort à lame, qui prend appui, du côté de l'étrier ou du boîtier, sur un élément de maintien amovible et dont le desserrage automatique est empêché à l'état monté, au moyen de deux pattes de maintien, qui font saillie des deux côtés du porte-garniture ou de la plaque de répartition de pression,
caractérisée par le fait
[a] qu'un évidement (21) est ménagé dans chaque branche latérale du ressort à lame (5), et
[b] que les pattes de maintien (19) sont réalisées sous la forme de saillies (19), qui font saillie à partir de l'arête extérieure du porte-garniture (1) ou de la plaque de répartition de pression, qui ont une partie en contre-dépouille sur leur bord extérieur et qui, à l'état monté, traversent les évidements (21) respectifs de sorte que le bord extérieur de cet évidement (21) s'applique à la partie en contre-dépouille.

2. Fixation de garniture suivant la revendication 1, caractérisée par le fait que le ressort à lame (5) possède un cintrage tel que, lors du montage du ressort à lame (5), en raison de l'état bandé de ce ressort, les évidements (21) peuvent passer librement sur les saillies (19).

3. Fixation de garniture suivant la revendication 1 ou 2, caractérisée par le fait que le ressort à lame (5) possède des extrémités arrondies (29), qui, à l'état monté, s'appliquent sur des pattes (17), qui sont utilisées pour extraire le porte-garniture (1) ou la plaque de répartition de pression.

4. Système de fixation de garniture suivant l'une des revendications 1 à 3, caractérisé par le fait qu'à l'état monté, la partie centrale (15) du ressort à lame (5) est séparée du bord extérieur (11) du porte-garniture (1) ou de la plaque de répartition de pression, par une distance telle qu'un espace libre suffisant est présent pour le débattement élastique du porte-garniture (1) ou de la plaque de répartition de pression, par rapport à la partie centrale (15) du ressort à lame (5).

5. Fixation de garniture suivant l'une des revendications 1 à 4, caractérisée par une saillie (9), qui fait saillie de la partie centrale (15) du ressort à lame (5) et au moyen de laquelle l'élément de maintien (7) agit, à l'état monté, sur le ressort à lame (5) en le mettant sous tension initiale.

6. Fixation de garniture suivant l'une des revendications 1 à 5, caractérisée par le fait qu'il est utilisé comme élément de maintien (7) un étrier de maintien (7), qui peut être vissé sur l'étrier de frein ou sur le boîtier de frein ou qui peut être fixé d'une autre manière.
